# EUROPÄISCHE PATENTSCHRIFT

(11) **EP 2 895 364 B1**
(45) Veröffentlichungstag und Bekanntmachung des Hinweises auf die Patenterteilung: **16.12.2020**
(21) Anmeldenummer: 13765993.4
(22) Anmeldetag: 17.09.2013
(51) Int. Cl.: B60T 13/57

(54) **BREMSKRAFTVERSTÄRKER**
BRAKE BOOSTER
AMPLIFICATEUR DE FORCE DE FREINAGE

(30) Priorität: 17.09.2012 DE 102012216585
(43) Veröffentlichungstag der Anmeldung: 22.07.2015
(73) Patentinhaber: Continental Teves AG & Co. OHG, 60488 Frankfurt am Main (DE)
(72) Erfinder: FALLER, Jürgen, 63796 Kahl (DE); JAKOBI, Ralf, 65439 Flörsheim (DE)
(86) Internationale Anmeldenummer: PCT/EP2013/069307
(87) Internationale Veröffentlichungsnummer: WO 2014/041201

(56) Entgegenhaltungen:
- DE-A1-102005 013 432

## Beschreibung

Die Erfindung betrifft einen pneumatischen Bremskraftverstärker für Kraftfahrzeuge, mit den Merkmalen nach dem Oberbegriff des Patentanspruch 1 sowie Verfahren zu seinem Betrieb.

### Stand der Technik:

Gattungsgemäße Bremskraftverstärker sind beispielsweise aus DE 10 2005 013 432 A1 hinreichend bekannt. Hierbei wird bei einem Bremsvorgang durch das Steuerventil eine Verbindung der Arbeitskammer mit der Atmosphäre freigegeben. Zwischen der Arbeitsamer und der Unterdruckkammer baut sich dadurch eine Druckdifferenz auf und das Steuergehäuse wird zusammen mit der beweglichen Wand in Richtung Unterdruckkammer versetzt. Nach einer Beendigung eines Bremsvorganges wird durch das Steuerventil eine Luftverbindung zwischen der Arbeitskammer und der Unterdruckkammer freigegeben, indem der Absaugkanal von dem Steuerventil deblockiert wird. Das Steuergehäuse läuft dabei zusammen mit der beweglichen Wand in Richtung Arbeitskammer zurück.

Weil Antriebsmotorgeräusche und sonstige Nebengeräusche in gut gedämmten Innenräumen moderner Kraftfahrzeuge immer weniger wahrnehmbar werden, gerät die Geräuschentwicklung mancher pneumatischer Bremskraftverstärker, die üblicherweise mit dem Fahrzeuginnenraum in Zirkulation stehen, verstärkt in einen Mittelpunkt und wird allgemein als nachteilig angesehen. Geräusche, welche während des Rücklaufens des Steuergehäuses entstehen, werden oft als besonders störend empfunden, wobei dieser Sachverhalt in unterschiedlichen Fahrzeugapplikationen unterschiedlich stark ausgeprägt ist.

### Aufgabe:

Es stellt sich daher die Aufgabe, einen pneumatischen Bremskraftverstärker mit verbesserten Geräuschverhalten anzubieten, welcher sich zudem leicht und wirtschaftlich an spezifische Anforderungen bei unterschiedlichen Fahrzeugapplikationen anpassen lässt.

### Lösung:

Die Aufgabe wird durch Merkmalskombinationen des unabhängigen Anspruchs gelöst. Unteransprüche geben weitere mögliche vorteilhafte Ausgestaltungen an.

Durch Verwendung eines gesonderten Einsatzelementes kann der Luftstrom zwischen der Arbeitskammer und der Unterdruckkammer gezielt verringert werden, wodurch die durch den Luftstrom verursachten Geräuschemissionen ebenfalls verringert werden. Insbesondere können dadurch mit einem geringen Aufwand mehrere Versionen eines Bremskraftverstärkers beziehungsweise Ableger einer Basisversion mit jeweils unterschiedlichen, gegenüber der Basisversion reduzierten Geräuschemissionsverhalten realisiert werden.

In einer ersten erfindungsgemäßen Ausführungsform können die Mittel zur Beeinflussung der Fluiddynamik als wenigstens ein Einsatzelement zum Einsetzten in den Absaugkanal gestaltet sein, wodurch die gestellte technische Aufgabe auf eine besonders einfache Weise beispielsweise durch eine nachträgliche reversible Modifikation einer bereits vorhandenen Basisversion des Bremskraftverstärkers gelöst sowie besonders effektiv eine Vielzahl von Bremskraftverstärkern mit jeweils angepassten Geräuschemissionen realisiert werden kann.
In einer vorteilhaften Weiterbildung kann eine besonders feine und genaue gezielte Beeinflussung des Strömungswiderstandes erreicht werden, indem das Einsatzelement über wenigstens einen luftdurchlässigen Durchbruch verfügt.
Eine erfindungsgemäße Ausführungsform sieht vor, dass das Einsatzelement als ein Bogenelement gestaltet ist, wodurch eine einfache Anpassung an die Geometrie des Luftkanals ermöglicht und ein zuverlässiger Sitz des Einsatzelements in dem Luftkanal realisiert werden.
In einer weiteren erfindungsgemäßen Ausführungsform kann das Einsatzelement als ein Ringelement gestaltet sein, wodurch dessen Montage signifikant vereinfacht wird.
In einer besonders vorteilhaften Weiterbildung kann das Einsatzelement in wenigstens einer definierten zirkularen Position in dem Steuergehäuse fixierbar gestaltet sein, wobei die Fixierung mittels wenigstens einer Ausnehmung und einer in die Ausnehmung eingreifenden Rastnase gebildet ist. Hierdurch werden ein zuverlässiger Sitz beim Betrieb des Bremskraftverstärkers gesichert und Montagefehlervermieden.
In einer anderen erfindungsgemäßen Ausführungsform können die Mittel zur Beeinflussung der Fluiddynamik derart ausgebildet sein, dass sie eine Luftpermeabilität in dem Absaugkanal verringern, beispielsweise aus einem aufgeschäumten oder gesinterten luftdurchlässigen Werkstoff gestaltet sein oder einen solchen Werkstoff enthalten. Hierfür kann der Luftstrom besonders gleichmäßig beeinflusst und unerwünschte Geräuschquellen wie Strömungsabrisse effektiv verhindert werden.
In einer besonders vorteilhaften Weiterbildung können ein oder mehrere Filtereinsatze zum Einsetzten in den Absaugkanal vorgesehen werden.

In einer weiteren vorteilhaften Ausführungsform der Erfindung kann der Führungsteller als Einsatzelement fungieren, indem dieser einen gegenüber der Basisversion verringerten durchströmten kumulierten Querschnitt der Durchbrüche aufweist. Dadurch kann mittels einfacher Modifikation einer relativ kostengünstigen Komponente sowie ohne Beeinträchtigungen von ursprünglichen Montageprozessen der gewünschte Effekt erreicht und der Strömungswiderstand in dem Absaugkanal erhöht werden. Weitere Einzelheiten, Merkmale, Vorteile und Anwendungsmöglichkeiten der Erfindung gehen aus Unteransprüchen zusammen mit der Beschreibung und den Zeichnungen hervor.

### Figurenbeschreibung:

Da ein grundsätzlicher Aufbau und Funktionsweise eines pneumatischen Bremskraftverstärkers hinlänglich bekannt sind, wird nachfolgend lediglich und vor allem auf die erfindungsrelevante Elemente und Abläufe eingegangen. Übereinstimmende Komponenten und Konstruktionselemente werden nach Möglichkeit mit gleichen Bezugszeichen versehen. Nachstehend zeigt:
Fig.1. Ein Teilschnitt eines bekannten Bremskraftverstärkers im Bereich des Steuergehäuses in Rücklaufstellung.
Fig.2. Ein erstes Ausführungsbeispiel eines erfindungsgemäßen Bremskraftverstärkers mit Bogeneinsätzen.
Fig.3. Ein zweites und ein drittes Ausführungsbeispiel eines erfindungsgemäßen Bremskraftverstärkers mit einem Ringeinsatz (3a) und einem weiteren Bogeneinsatz (3b).
Fig.4. Ein viertes Ausführungsbeispiel eines erfindungsgemäßen Bremskraftverstärkers mit einem Filtereinsatz
Fig.5. Ein fünftes und ein sechstes Ausführungsbeispiel eines erfindungsgemäßen Bremskraftverstärkers.

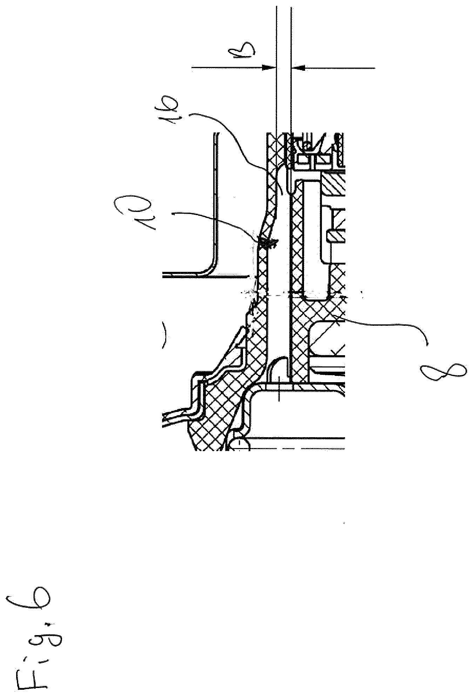

Fig.6. Ein Ausführungsbeispiel eines Bremskraftverstärkers mit einer Querschnittsvariation des Absaugkanals im Bereich des Halters.
Fig.7. Ein Ausführungsbeispiel eines Bremskraftverstärkers mit Variation von Halterlängen.
Fig.8. Ein Ausführungsbeispiel eines erfindungsgemäßen Bremskraftverstärkers mit einem Filterring in einer Nut im Bereich des Halters.
Fig.9. Ein Ausführungsbeispiel eines Bremskraftverstärkers mit Variation am Ventilkolben.
Fig.10. Ein Ausführungsbeispiel eines Bremskraftverstärkers mit Variation von Dicke des Verriegelungskeils.
Fig.11. Ein Ausführungsbeispiel eines Bremskraftverstärkers mit Variation des Abstandes zwischen der Anlage des Verriegelungskeils und Dichtkante des Steuerventils.
Fig.12. Ein Ausführungsbeispiel eines Bremskraftverstärkers mit Variation von Keilbreitenausschnitt im Steuergehäuse.

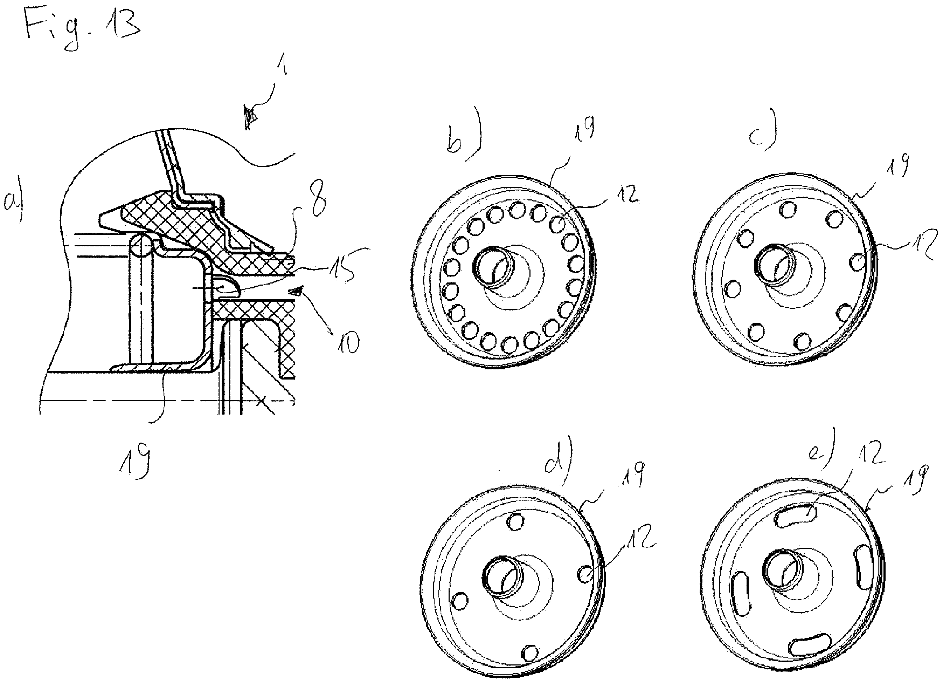

Fig.13. Weitere Ausführungsbeispiele eines erfindungsgemäßen Bremskraftverstärkers mit Variationen von Führungstellern.

### Fig.1

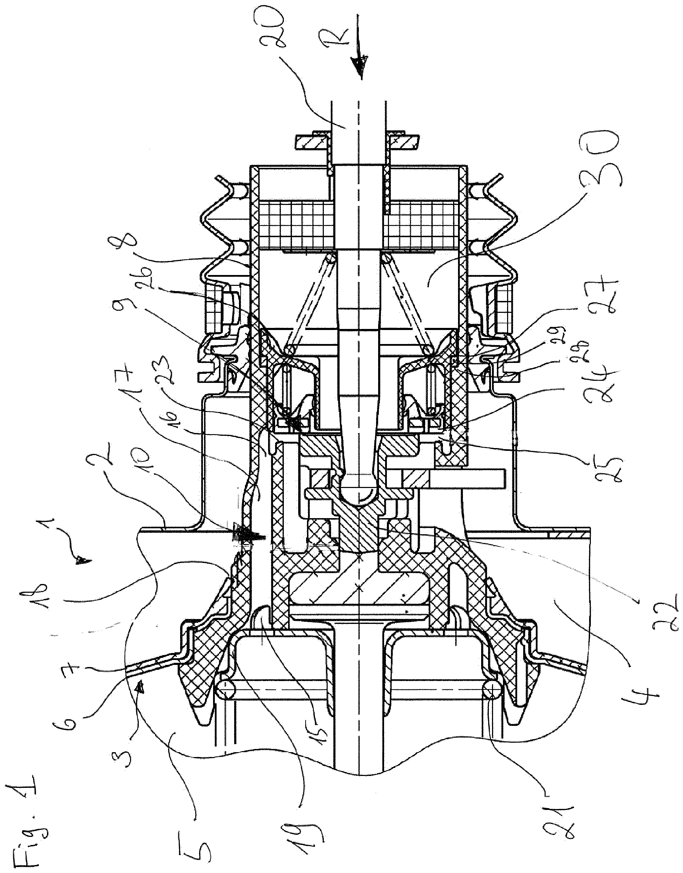

Fig.1 zeigt ein Teilausschnitt eines bekannten pneumatischen Bremskraftverstärkers 1. Der Innenraum des schematisch angedeutete Verstärkergehäuses 2 ist durch eine axial begliche Wand 3 aufgeteilt in eine Arbeitskammer 4 und eine Unterdruckkammer 5. Die Bewegliche Wand 3 umfasst einen Membranteller 6 und ein Rollmembran 7. Ein Steuergehäuse 8 ist in dem Verstärkergehäuse 2 zwischen einer Kolbenstange 20 und einer Rückholfeder 21 entlang einer Betätigungsrichtung R axial beweglich eingespannt, wobei die Rückholfeder 21 sich über einen Führungsteller 19 sich an dem Steuergehäuse 8 abstützt. Die Rollmembran 7 liegt dabei an ihrer radialen Innenkante mit einer umlaufenden Dichtlippe 18 abdichtend an dem Steuergehäuse 8 und ist an ihrer anderen nicht gezeigten radialen Außenkante abdichtend mit dem Verstärkergehäuse 2 verbunden, beispielsweise verklemmt.

Um einen steuerbaren Luftaustausch zwischen der Arbeitskammer 4 und der Unterdruckkammer 5 zu ermöglichen ist ein Absaugkanal 10 vorgesehen, welcher durch ein Steuerventil 9 blockierbar ist. Der Absaugkanal 10 stellt eine pneumatische Verbindung zwischen der Arbeitskammer 4 und dem Steuerventil 9 dar und weist üblicherweise eine radial umlaufende Ringnut 15 und einen Ringspalt 16, welche über ein oder mehrere Verbindungskanäle 17 verbunden sind. Dabei sind in dem Führungsteller 19 des bekannten Bremskraftverstärkers 1 eine Anzahl von Durchbrüchen 12 vorgesehen, welche einen möglichst ungehinderten Luftaustausch zwischen der Arbeitskammer 4 und dem Steuerventil 9 ermöglicht und daher unter Einhaltung einer für die Abstützung der Rückholfeder 21 ausreichenden Formstabilität ein möglichst großer Querschnitt zum Durchlassen der Luftmassen angestrebt wird.

Ein Tellerventil 24 ist in einem Halter 26 axial federnd angeordnet. Der Halter 26 wird im inneren des Steuergehäuses 8 gelagert, wobei seine axiale Position in die Betätigungsrichtung R durch einen umlaufenden Anschlag 27, einen korrespondierenden Absatz 28 und einen Zwischenring 29 maßgeblich bestimmt sind. Es sind jedoch auch Lösungen ohne Zwischenring 29 möglich.

Das Steuerventil 9 interagiert mittels des Tellerventils 24 mit einem Ventilkolben 22 und einer Dichtkante 23 derart, dass bei Bedarf eine Luftverbindung zwischen der Arbeitskammer 4 und der Unterdruckkammer 5 durch Abheben der Dichtkante 23 vom Tellerventil 24 hergestellt werden kann, indem das Tellerventil 24 durch den Ventilkolben 22 rückwärts, das heißt entgegen der Betätigungsrichtung R, verschoben wird. Dabei bildet sich zwischen der Dichtkante 23 und dem Tellerventil 24 ein Absaugspalt 25, durch welchen ein Luftaustausch zwischen der Arbeitskammer 4 und der Unterdruckkammer 5 stattfindet. Dies geschieht üblicherweise bei Beendigung eines Bremsvorganges und verursacht, bedingt durch den Druckausgleich in den Arbeitskammer 4 und der Unterdruckkammer 5, sowie eine durch die Rückholfeder auf das Steuergehäuse 8 ausgeübte Kraft, eine rückläufige Bewegung des Steuergehäuses 8 zusammen mit der Wand 3. Eine solche sogenannte Rücklaufstellung ist in der Fig.1 abgebildet.
Bei einem Bremsvorgang dagegen wird eine Luftverbindung zwischen der Arbeitskammer 4 und der Atmosphäre hergestellt, indem der Ventilkolben 22 vom Tellerventil 24 in Betätigungsrichtung R abgehoben wird und dadurch einen Luftaustausch zwischen der Arbeitskammer 4 und einem die Kolbenstange 20 umgebenden Gehäuseinnenraum 30 ermöglicht, welcher üblicherweise mit dem Fahrzeuginnenraum verbunden ist.

### Fig.2

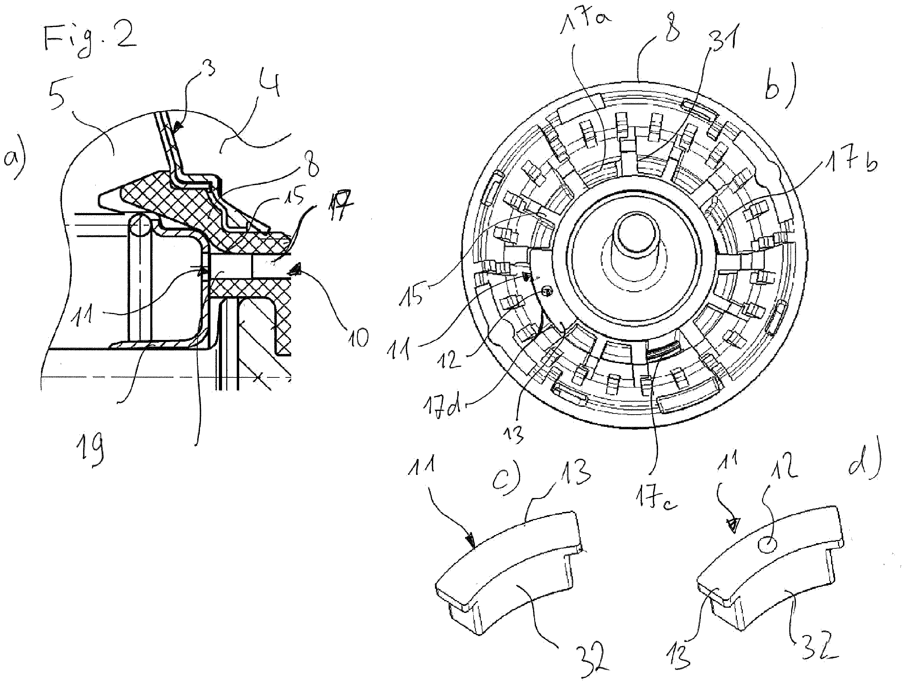

Fig.2 zeigt eine erste Ausführungsform eines erfindungsgemäßen Bremskraftverstärkers. Dem Teilschnitt in der Ansicht "a" ist zu entnehmen, dass im Bereich der Ringnut 15 des Steuergehäuses 8 ein Einsatzelement 11 angeordnet ist, welcher in den Verbindungskanal 17 hineinragt und diesen versperrt.

Den Ansichten "c" und "d" ist zu entnehmen, dass das Einsatzelement 11 im der dargestellten Ausführungsform als ein Bogenelement 13 ausgebildet ist, dessen Zirkularität an die Ringnut 15 angepasst ist. Das Bogenelement 13 weist eine Aufformung 32 auf, welche sich in axiale Richtung ausbreitet und in ihrer zirkularen Ausdehnung schmaler als das Bogenelement 13 ausgebildet ist. In der Ansicht "d" verfügt das Einsatzelement 11 zusätzlich über einen Durchbruch 12, welcher einen Luftdurchtritt durch das Einsatzelement 11 hindurch ermöglicht. Dabei sind Durchbrüche mit unterschiedlichen Querschnitten innerhalb der Erfindung vorstellbar.

In der räumlichen Darstellung "b" ist zu sehen, dass das Steuergehäuse 8 insgesamt vier Verbindungskanäle 17a-d aufweist, welche in die Ringnut 15 münden. Der Verbindungskanal 17d ist dabei durch ein Einsatzelement 11 mit dem Durchbruch 12 versperrt, wobei die Aufformung 32 in den Verbindungskanal 17d hineinragt und das Bogenelement 13 auf den Rippen 31 aufliegt. Dadurch wird der Verbindungskanal 17d teilweise versperrt und ein hydraulischer Querschnitt des Absaugkanals 10 verringert sich. Bei Bedarf können mehrere Einsätze 11 zum Versperren von weiteren Verbindungskanälen 17a,b,c eingesetzt werden um den hydraulischer Querschnitt des Absaugkanals 10 noch weiter zu verringern.

Ein hydraulischer Querschnitt ist eine in der Strömungslehre übliche Hilfsgröße zur Beurteilung von Strömungsverhalten in Strömungskanälen mit unrunden Querschnitten. Der hydraulische Querschnitt errechnet sich als das Vierfache eins durchströmten Querschnittes des Strömungskanals geteilt durch den benetzten Umfang des Strömungskanals. Qualitativ kann man feststellen, dass bei gleichbleibenden Fluidmassen, beispielsweise Luftmassen, welche einen Strömungskanal passieren, eine Verringerung des hydraulischen Querschnittes des Strömungskanals eine Erhöhung des Strömungswiderstandes verursacht.

Durch die Verringerung des hydraulischen Querschnittes benötigen die Luftmassen bei ihrem Transfer zwischen der Unterdrucckammer 5 und der Arbeitskammer 4 bei sonst gleich bleibenden Randbedingungen wegen dem erhöhten Strömungswiderstand mehr Zeit, Das Rücklaufen des Steuergehäuses 8 und Druckausgleich verlaufen langsamer, Dynamik wird verringert. Zudem erhöht sich eine Dämpfende Wirkung durch einen länger anhaltenden, verglichen mit dem Druck in der Unterdruckkammer 5 höheren Druck in der Arbeitskammer 4. Die vorgenannten Effekte führen insgesamt zu einer signifikanten Reduktion von Geräuschemissionen während des Rücklaufens des Steuergehäuses 8.

Der Ansicht a) ist weiter zu entnehmen, dass die Einsätze 11 in dem zusammengebauten Zustand des Bremskraftverstärkers 1 zwischen dem Steuergehäuse 8 und dem Führungsteller 19 angeordnet und dadurch ortsfest gesichert sind.

Ausführungen mit einer abweichenden Zahl von Verbindungskanälen 17 sind ebenso innerhalb der Erfindung möglich.

### Fig.3

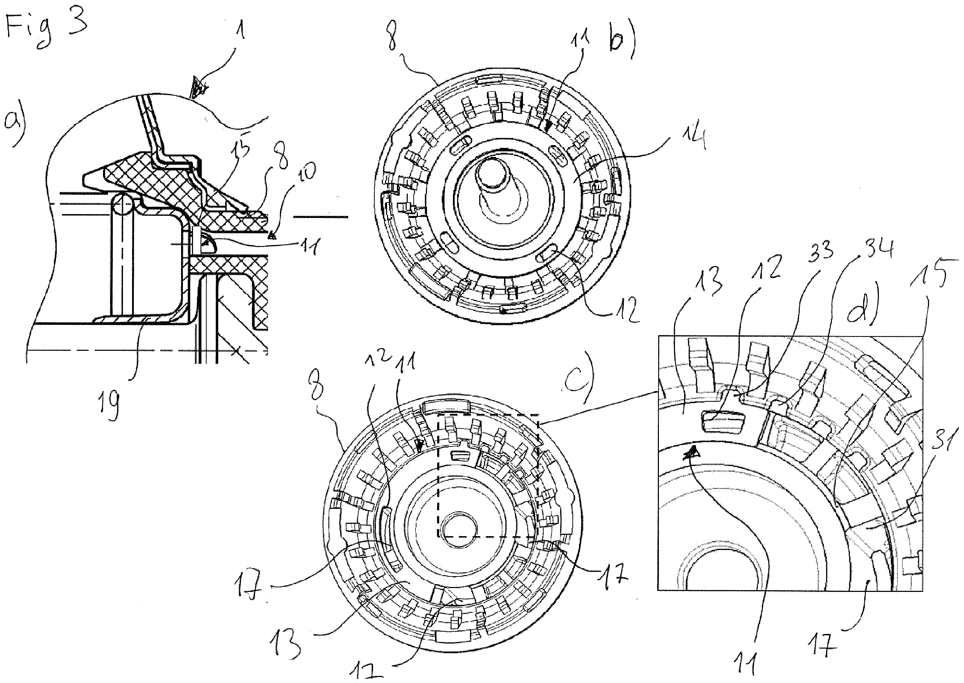

In der Fig.3 sind zwei weitere Ausführungsbeispiele des erfindungsgemäßen Bremskraftverstärkers 1 dargestellt. Im Unterschied zu den Ausführungen nach Fig.2 verfügen die Einsätze 11 in den gezeigten Ausführungen über keine Aufformungen 32 und ragen somit nicht in die Verbindungskanäle 17 hinein, sondern verdecken diese lediglich im Bereich der Ringnut 15. Durchbrüche 12 zum Durchlassen von Luftmassen durch die Einsätze sind vorgesehen.

Dabei können Anzahl, Form, Querschnittsfläche und Position von Durchbrüchen 12 in einem Einsatzelement 11 durchaus unterschiedlich gestaltet werden können, um den vorgesehenen Zweck zu erreichen. Der vorgesehene Zweck hierbei ist eine Begrenzung des Luftmassenstroms durch den Absaugkanal 10 um ein gewünschtes Maß durch eine gezielte Verkleinerung des hydraulischen Querschnitts, welcher in einer Ausgangs- Beziehungsweise Basisversion des Steuergehäuses 8 exklusive Einsätze 11 im Ansaugkanal 10 zur Verfügung stünde.

Das Einsatzelement 11 in der Ansicht "b" ist als ein Ringelement 14 gestaltet, welcher die Ringnut weitgehend vollständig überdeckt und einen Luftmassenaustausch weitgehend oder ausschließlich durch die Durchbrüche 12 erlaubt.

Das Einsatzelement 11 in der Ansicht "c" ist als ein Bogenelement 13 gestaltet, wobei seine zirkulare Ausdehnung, derart gewählt ist, das er mehr als nur einen Verbindungskanal 17 verdecken kann.

In einer Weiterbildung der Erfindung kann zusätzlich eine Verrastung zur einer genauen zirkularen Positionierung von einem Bogenelement 13 oder einem Scheibenelement 14 vorgesehen sein, wie insbesondere in der Detailansicht "d" gezeigt ist. Das Bogenelement weist eine Rastnase 33 aus, welche in eine Ausnehmung 34 eingreift und so in einer gewünschten bestimmten zirkularen Position verdrehgesichert in dem Steuergehäuse gelagert werden kann. Es ist möglich, mehrere Ausnehmungen vorzusehen, um eine Variation von zirkularen Lagen abbilden zu können und so mit nur einem einzigen Bogenelement 14 unterschiedliche Überdeckungen von den Verbindungskanälen 17 zu ermöglichen. Dadurch können einfach und kosteneffizient mit einem einzigen Einsatzelement 11 mehrere Varianten des Bremskraftverstärkers 1 mit unterschiedlichen Rücklaufgeschwindigkeiten des Steuergehäuses 8 realisiert werden.

Es sind auch Kombinationen von mehreren und/oder unterschiedlich geformten Rastnasen und korrespondierenden Ausnehmungen ähnlich einer Kodierung vorstellbar, um sicher nur bestimmte räumliche Positionen des Bogenelements 13 oder Ringelements 14 zu erlauben und so deren Montage zu vereinfachen und Fehleinbau, beispielsweise einen spiegelverkehrten Einbau, zu vermeiden.

Rastelemente können dabei auch anders ausgebildet sein, beispielsweise als axial aufragende Anschlagelemente am Einsatzelement 11, welche mit den Rippen 31 zusammenwirken und gleichzeitig einen spiegelverkehrten Einbau des damit ausgestatteten Einsatzelementes 11 verhindern.

### Fig.4

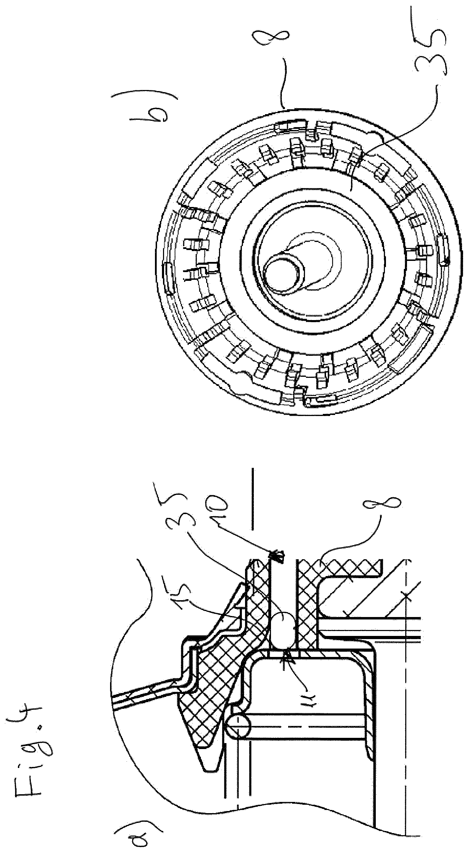

Fig.4 zeigt eine weitere Ausführungsform der Erfindung, bei der das Einsatzelement 11 ein Filterring 35 gestaltet ist. Der Filterring kann aus einem aufgeschäumten oder gesinterten Werkstoff, beispielsweise einem Schwammwerkstoff hergestellt werden und überdeckt den gesamten Ansaugkanal 10 im Bereich der Ringnut 15.

Durch eine verringerte Luftpermeabilität verursachen solche Werkstoffe naturgemäß einen höheren Strömungswiderstand in den durchströmenden Medien. So kann durch die Wahl eines passenden Werkstoffes und eine geeignete Dimensionierung der Strömungswiderstand im Absaugkanal 10 gezielt erhöht und die Rücklaufgeschwindigkeit des Steuergehäuses 8 herabgesetzt werden. Zudem kann ein solcher Filterung 35 sehr kostengünstig hergestellt und besonders einfach sowie Fehlervermeidend montiert werden.

### Fig.5

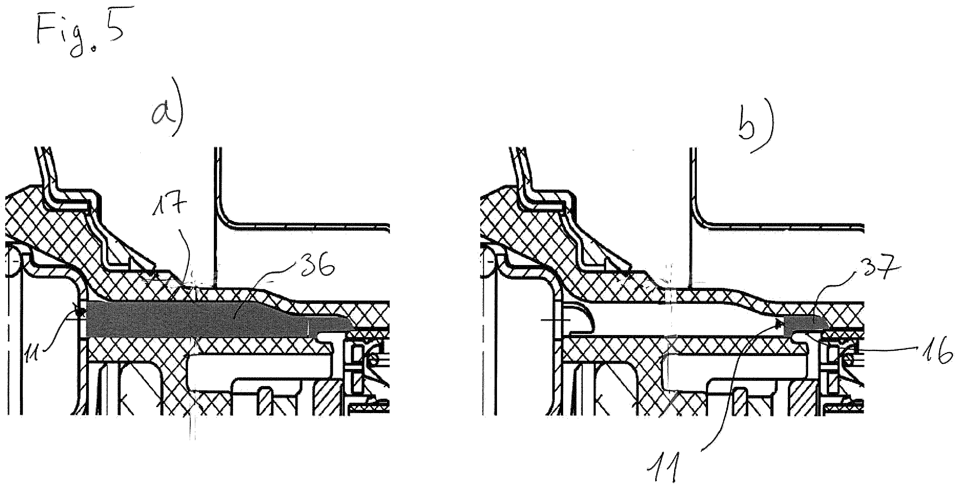

Fig.5 zeigt zwei weitere Ausführungsbeispiele mit Einsätzen 11, welche nach dem gleichen Wirkprinzip wie in der Fig.4 beschrieben, funktionieren, jedoch anders geformt und positioniert sind.

In der Ansicht "a" ist das Einsatzelement 11 im Unterschied zur Fig.4 als ein Filtereinsatz 36 zum einsetzen in den Verbindungskanal 17 gestaltet.

Das Einsatzelement 11 in der Ansicht "b" ist als ein Filterrohr 37 geformt und in dem Ringspalt 16 angeordnet.

### Fig.6

Fif.6 zeigt eine weitere Ausführungsform, bei der eine Querschnittsbreite B des Ringspaltes 16 variiert werden kann, um eine Querschnittsverengung im Absaugkanal 10 zu erreichen und dadurch den Strömungswiderstand zu erhöhen. Dies wird erreicht, indem in dem das Spritzwerkzeug für die Herstellung des Steuergehäuses 8 derart gestaltet ist, das verschiedene Breiten B des Ringspaltes 16 besonders einfach durch Verwendung von verschiedenen korrespondierenden Wechseleinsätzen realisiert werden können.

Dadurch lassen sich schnell und kostengünstig auch kleinere Chargen von Steuergehäusen 8 mit unterschiedlichen Strömungswiderstandswerten im Absaugkanal 10 herstellen. Montageaufwand erhöht sich nicht, da die Anzahl von Bauteilen und Montageabläufe gleich bleiben.

### Fig.7

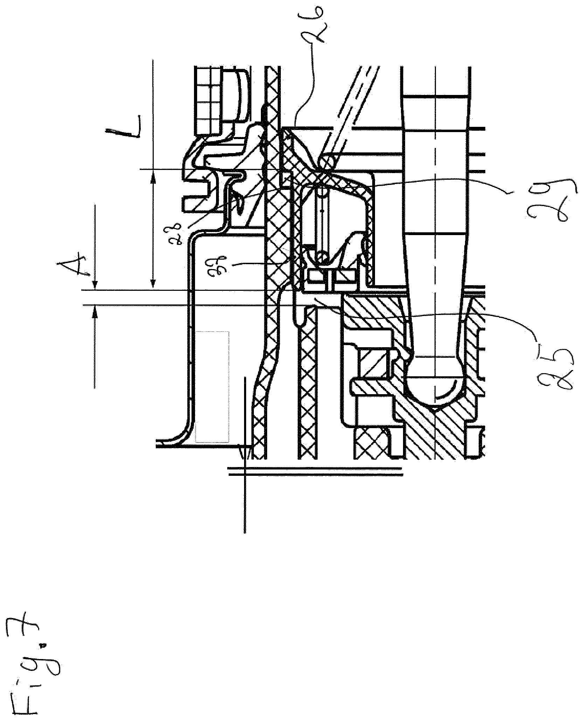

Fig.7 zeigt eine weitere Ausführungsform, bei der die Breite A des Absaugspaltes 25 variiert werden kann, indem eine Auswahl an günstig herstellbaren Haltern 26 mit jeweils unterschiedlichen Längen L einer äußeren radialen Ringfläche 38 des Halters 26 verfügbar gemacht wird. Je nach Länge L ragt die Ringfläche 38 mehr oder weniger in den Absaugspalt 25 hinein, wodurch der Strömungswiderstand in dem Absaugspalt 25 gesteuert werden kann.

So kann ein Halter 26 mit einer passenden Länge L verwendet werden um eine Variante des Bremskraftverstärkers 1 mit einer gewünschten Rücklaufgeschwindigkeit des Steuergehäuses 8 zu realisieren.

### Fig.8

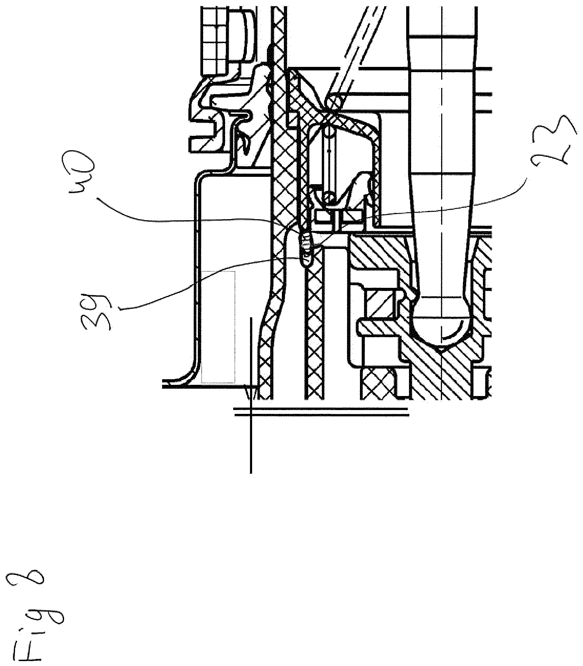

Die Ausführungsform in der Fig.8 weist einen weiteren Filterring 40 auf, welcher in einer, die Dichtkante 23 umlaufende Dichtkantennut 39 angeordnet ist.

### Fig.9

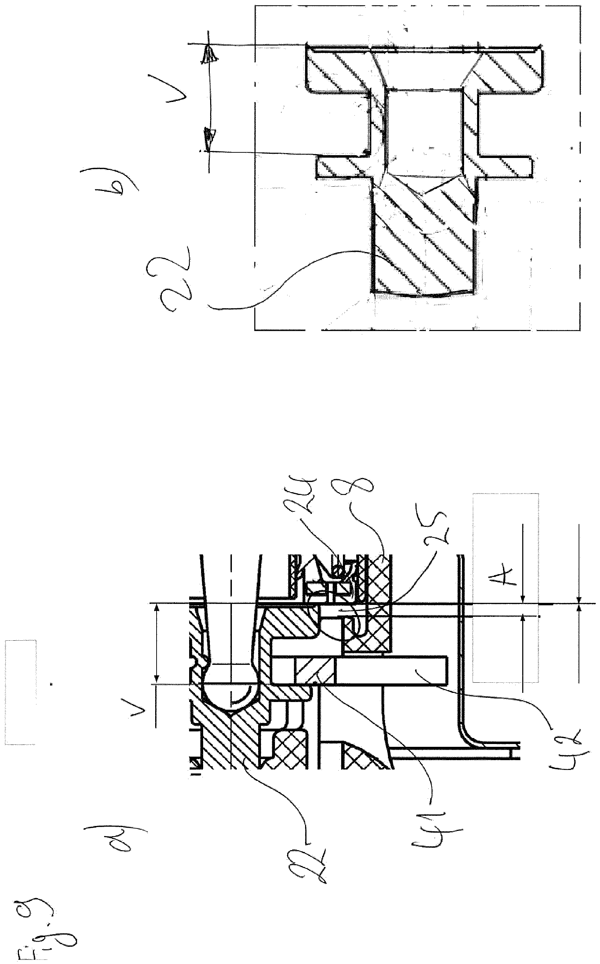

In der Ausführungsform nach Fig.9 kann die Breite A des Absaugspaltes 25 variiert werden, indem eine Auswahl an günstig herstellbaren Ventilkolben 22 mit jeweils unterschiedlichen Längen V verfügbar gemacht wird. Ein Ventilkolben 22 schlägt an einem Verriegelungskeil 41 an, welcher in eine Nut 42 in dem Steuergehäuse 8 eingesetzt ist. Je nach Länge V wird beim Rücklaufen des Steuergehäuses 8 ein Abstand zwischen dem Ventilkolben 22 und dem Tellerventil 24 mehr oder weniger geöffnet, was zu unterschiedlichen durchströmten Querschnitten in dem Absaugspalt 25 und somit unterschiedlichen Strömungswiderständen führt.

### Fig.10

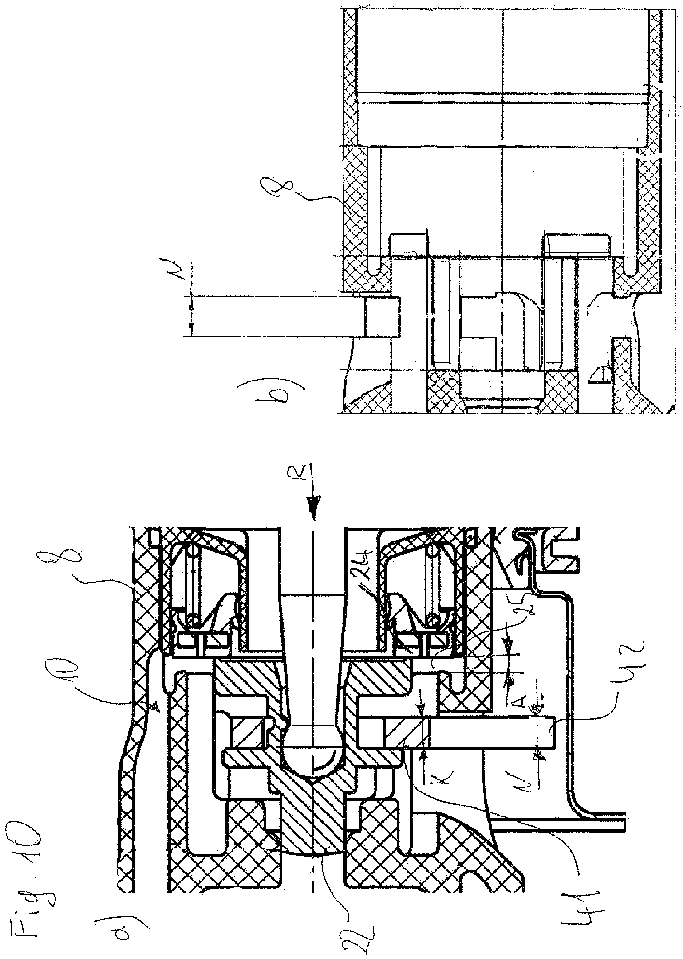

In der Ausführungsform nach Fig.10 wird die Breite A des Absaugspaltes 25, und somit auch der Strömungswiderstand im Absaugkanal 10 variiert, indem eine Auswahl Verriegelungskeilen 41 mit jeweils unterschiedlichen Dicken K verfügbar gemacht wird. Eine Nutbreite N der Nut 42 bleibt dabei unverändert.

### Fig.11

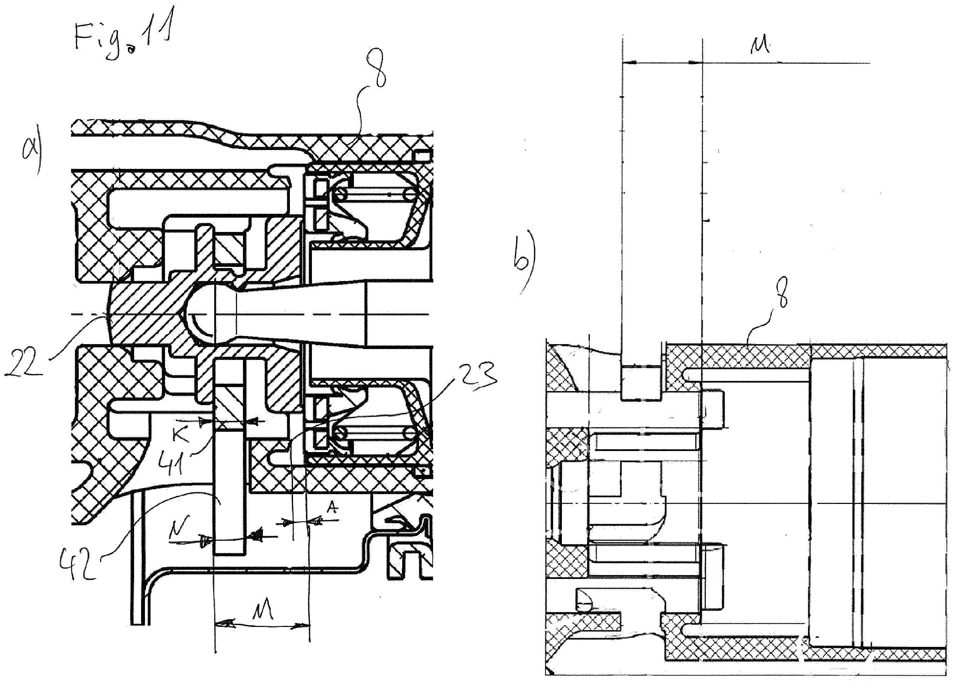

In der Ausführungsform nach Fig.11 der Abstand M zwischen der Nut 42 und Dichtkante 23 variiert, indem geeignete Wechseleinsätze im Spritzwerkzeug des Steuergehäuses 8 verwendet werden. Die Nutbreite N der Nut 42 sowie die Dicke K des Verriegelungskeils 41 und der Ventilkolben 22 können dabei unverändert bleiben. Die Ansicht "a" zeigt dabei eine Teilschnittansicht des Steuergehäuses 8 im Zusammenbau und die Ansicht "b" als Einzelteil.

### Fig.12

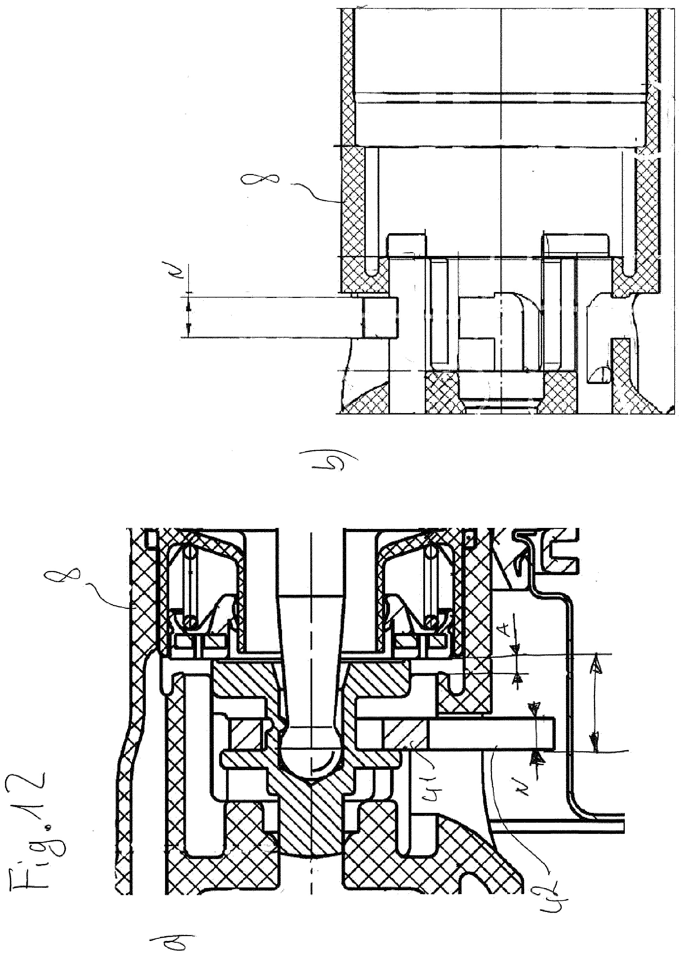

In der Ausführungsform nach Fig.12 können durch geeignete Wechseleinsetzte des Spritzwerkzeuges des Steuergehäuses 8 die Nutbreite N der Nut 42 einfach mit einem gewünschten Maß realisiert werden. Wie in der Fig.11 ist in der Ansicht "a" ein Schnitt durch die Baugruppe und in der Ansicht "b" durch das Einzelteil Steuergehäuse 8 dargestellt.

### Fig.13

In einer Basisversion des Bremskraftverstärkers 1 Führungstellers 19 wird üblicherweise ein Führungsteller 19 mit einer möglichst großen Querschnittsfläche für den Luftdurchtritt verwendet. Eine solche Ausführung ist in der Ansicht "b" dargestellt.

Die Querschnittsfläche für den Luftdurchtritt wird als Summe von Durchtrittsfläche von allen Durchbrüchen 12 gebildet.

Eine Erhöhung des Strömungswiderstandes im Absaugkanal 10 kann nun besonders einfach erreicht werden, indem der Führungsteller 19 statt mit einer in den bekannten gattungsgemäßen Bremskraftverstärkern angestrebten möglichst großen, mit einer reduzierten Querschnittsfläche verwendet werden. Das gewünschte Maß kann durch eine Reduzierung der Anzahl von den Durchbrüchen 12 und/oder durch eine Veränderung deren Kontur realisiert werden. Die Ansichten "c", "d" und "e" zeigen drei verschiedene mögliche erfindungsgemäße Ausführungsbeispiele, wobei die gezeigte Auswahl nicht abschließend ist und weitere Ausgestaltungen mit jeweils einer anderen Anzahl, Form oder Größe der Durchbrüche innerhalb der Erfindung möglich sind.

### Bezugszeichen:

- 1: Bremskraftverstärker
- 2: Verstärkergehäuse
- 3: Axial bewegliche Wand
- 4: Arbeitskammer
- 5: Unterdruckkammer
- 6: Membranteller
- 7: Rollmembran
- 8: Steuergehäuse
- 9: Steuerventil
- 10: Absaugkanal
- 11: Einsatzelement
- 12: Durchbruch
- 13: Bogenelement
- 14: Ringelement
- 15: Ringnut
- 16: Ringspalt
- 17: Verbindungskanal
- 18: Dichtlippe
- 19: Führungsteller
- 20: Kolbenstange
- 21: Rückhohlfeder
- 22: Ventilkolben
- 23: Dichtkante
- 24: Tellerventil
- 25: Absaugspalt
- 26: Halter
- 27: Anschlag
- 28: Absatz
- 29: Zwischenring
- 30: Gehäuseinnenraum
- 31: Rippe
- 32: Aufformung
- 33: Rastnase
- 34: Ausnehmung
- 35: Filterring
- 36: Filtereinsatz
- 37: Filterrohr
- 38: Ringfläche
- 39: Dichtkantennut
- 40: Filterring
- 41: Verriegelungskeil
- 42: Nut
- A: Breite Absaugspalt
- B: Querschnittsbreite Ringspalt
- K: Dicke Verriegelungskeil
- L: Länge Ringfläche
- M: Abstand Nut-Dichtkante
- N: Nutbreite
- R: Betätigungsrichtung
- V: Länge am Verriegelungskeil

## Patentansprüche

1. Pneumatischer Bremskraftverstärker (1) für Kraftfahrzeug
• mit einem Verstärkergehäuse (2), dessen Innenraum durch wenigstens eine, mit einem pneumatischen Differenzdruck beaufschlagbare, axial bewegliche Wand (3) in wenigstens eine Arbeitskammer (4) und wenigstens eine Unterdruckkammer (5) unterteilt ist, wobei die bewegliche Wand(3) einen Membranteller (6) und eine Rollmembran (7) umfasst, welche zwischen dem Verstärkergehäuse (1) und einem Steuergehäuse (8) abdichtend angeordnet ist,
• mit einem, den Differenzdruck steuernden, in dem Steuergehäuse (8) angeordneten Steuerventil (9), welcher eine Verbindung der Arbeitskammer (4) mit der Unterdruckkammer (5) oder einer Atmosphäre steuert,
• mit wenigstens einem in dem Steuergehäuse (8) integrierten Absaugkanal (10) zur Verbindung der Unterdruckkammer mit der Arbeitskammer, wobei der Absaugkanal (10) durch das Steuerventil (9) blockierbar ist,
**dadurch gekennzeichnet, dass** zwischen der Unterdruckkammer (5) und Arbeitskammer (4) wenigstens ein gesondertes Einsatzelement (11) zu einer gezielten Verringerung eines durchströmten Querschnitts des Absaugkanals (10) angeordnet ist.

2. Pneumatischer Bremskraftverstärker (1) nach Anspruch 1 **dadurch gekennzeichnet, dass** das Einsatzelement (11) über wenigstens einen luftdurchlässigen Durchbruch (12) verfügt.

3. Pneumatischer Bremskraftverstärker (1) nach wenigstens einem der Ansprüche 1 oder 2 **dadurch gekennzeichnet, dass** der Absaugkanal (10) zwischen der Unterdruckkammer (5) und Arbeitskammer (4) mehrere parallel verlaufende Verbindungskanäle (17a,b,c,d) aufweist, wobei das Einsatzelement (11) in wenigstens einen Verbindungskanal (17a,b,c,d) hineinragt und diesen dadurch zumindest abschnittsweise versperrt.

4. Pneumatischer Bremskraftverstärker (1) nach wenigstens einem der Ansprüche 1 oder 2 **dadurch gekennzeichnet, dass** der Absaugkanal (10) arbeitskammerseitig eine Ringnut (15) aufweist und das Einsatzelement (11) als ein Ringelement (14) gestaltet ist, welches den Absaugkanal (10) in Bereich der Ringnut (15) zumindest bereichsweise verdeckt.

5. Pneumatischer Bremskraftverstärker (1) nach Anspruch 4 **dadurch gekennzeichnet, dass** das Ringelement (14) in wenigstens einer definierten zirkularen Position in dem Steuergehäuse fixierbar ist, wobei die Fixierung mittels wenigstens einer Ausnehmung (34) und einer in die Ausnehmung (34) eingreifenden Rastnase (33) gebildet ist.

6. Pneumatischer Bremskraftverstärker (1) nach Anspruch 1 **dadurch gekennzeichnet, dass** das Einsatzelement (11) aus einem aufgeschäumten oder gesinterten luftdurchlässigen Werkstoff gestaltet ist oder einen solchen Werkstoff enthält.

7. Pneumatischer Bremskraftverstärker (1) nach Anspruch 6 **dadurch gekennzeichnet, dass** das Einsatzelement (11) als wenigstens ein Filtereinsatz zum Einsetzten in den Absaugkanal (10) gestaltet ist.

## Claims

1. Pneumatic brake booster (1) for a motor vehicle
• having a booster housing (2), the interior space of which is divided by at least one axially movable wall (3), which can be loaded with a pneumatic differential pressure, into at least one working chamber (4) and at least one vacuum chamber (5), wherein the movable wall (3) comprises a diaphragm plate (6) and a rolling diaphragm (7) which is arranged sealingly between the booster housing (1) and a control housing (8),
• having a control valve (9) which controls the differential pressure, is arranged in the control housing (8) and controls a connection of the working chamber (4) to the vacuum chamber (5) or an atmosphere,
• having at least one extraction duct (10) which is integrated into the control housing (8) and which serves for connection of the vacuum chamber to the working chamber, wherein the extraction duct (10) can be blocked by the control valve (9),
**characterized in that,** between the vacuum chamber (5) and working chamber (4), there is arranged at least one separate insert element (11) for targetedly reducing a through-flow cross section of the extraction duct (10).

2. Pneumatic brake booster (1) according to Claim 1, **characterized in that** the insert element (11) has at least one air-permeable aperture (12).

3. Pneumatic brake booster (1) according to at least one of Claims 1 and 2, **characterized in that** the extraction duct (10) has multiple connecting ducts (17a,b,c,d), which run parallel, between the vacuum chamber (5) and working chamber (4), wherein the insert element (11) projects into at least one connecting duct (17a,b,c,d) and thus blocks the latter at least in certain portions.

4. Pneumatic brake booster (1) according to at least one of Claims 1 and 2, **characterized in that** the extraction duct (10) has an annular groove (15) at a working chamber side, and the insert element (11) is designed as a ring element (14) which covers the extraction duct (10) at least in certain regions in the region of the annular groove (15).

5. Pneumatic brake booster (1) according to Claim 4, **characterized in that** the ring element (14) can be fixed in at least one defined circular position in the control housing, wherein the fixing is formed by means of at least one recess (34) and a latching projection (33) engaging in the recess (34).

6. Pneumatic brake booster (1) according to Claim 1, **characterized in that** the insert element (11) is made from a foamed or sintered air-permeable material or contains such a material.

7. Pneumatic brake booster (1) according to Claim 6, **characterized in that** the insert element (11) is designed as at least one filter insert for insertion into the extraction duct (10).

## Revendications

1. Amplificateur de force de freinage pneumatique (1) pour véhicule automobile, comprenant
- un boîtier d'amplificateur (2) dont l'espace interne est divisé par au moins une paroi (3) déplaçable axialement, pouvant être sollicitée avec une pression différentielle pneumatique, en au moins une chambre de travail (4) et au moins une chambre à dépression (5), la paroi déplaçable (3) comprenant un disque de diaphragme (6) et un diaphragme roulant (7) qui est disposé de manière hermétique entre le boîtier d'amplificateur (1) et un boîtier de commande (8),
- une soupape de commande (9) commandant la pression différentielle, disposée dans le boîtier de commande (8), qui commande une communication de la chambre de travail (4) avec la chambre à dépression (5) ou avec une atmosphère,
- au moins un canal d'aspiration (10) intégré dans le boîtier de commande (8) pour la communication de la chambre à dépression avec la chambre de travail, le canal d'aspiration (10) pouvant être bloqué par la soupape de commande (9),
**caractérisé en ce qu'**au moins un élément d'insertion séparé (11) est disposé entre la chambre à dépression (5) et la chambre de travail (4) pour effectuer une réduction ciblée d'une section transversale d'écoulement du canal d'aspiration (10).

2. Amplificateur de force de freinage pneumatique (1) selon la revendication 1,
**caractérisé en ce que** l'élément d'insertion (11) dispose d'au moins un orifice perméable à l'air (12) .

3. Amplificateur de force de freinage pneumatique (1) selon au moins l'une des revendications 1 et 2,
**caractérisé en ce que** le canal d'aspiration (10) entre la chambre à dépression (5) et la chambre de travail (4) présente plusieurs canaux de communication s'étendant parallèlement (17a, b, c, d), l'élément d'insertion (11) pénétrant dans au moins un canal de communication (17a, b, c, d) et bloquant ainsi celui-ci au moins en partie.

4. Amplificateur de force de freinage pneumatique (1) selon au moins l'une des revendications 1 et 2,
**caractérisé en ce que** le canal d'aspiration (10) présente, du côté de la chambre de travail, une rainure annulaire (15) et l'élément d'insertion (11) est configuré sous forme d'élément annulaire (14) qui recouvre au moins en partie le canal d'aspiration (10) dans la région de la rainure annulaire (15).

5. Amplificateur de force de freinage pneumatique (1) selon la revendication 4,
**caractérisé en ce que** l'élément annulaire (14) peut être fixé dans le boîtier de commande dans au moins une position circulaire définie, la fixation étant réalisée au moyen d'au moins un évidement (34) et d'un ergot d'encliquetage (33) s'engageant dans l'évidement (34).

6. Amplificateur de force de freinage pneumatique (1) selon la revendication 1,
**caractérisé en ce que** l'élément d'insertion (11) est configuré à partir d'un matériau moussé ou fritté perméable à l'air ou contient un tel matériau.

7. Amplificateur de force de freinage pneumatique (1) selon la revendication 6,
**caractérisé en ce que** l'élément d'insertion (11) est configuré au moins en tant qu'insert de filtre pour l'insertion dans le canal d'aspiration (10).
